# EUROPEAN PATENT APPLICATION

(11) **EP 4 480 787 A1**
(43) Date of publication of application: **25.12.2024**
(21) Application number: 24183268.2
(22) Date of filing: 20.06.2024
(51) Int. Cl.: B62D 5/30

(54) **EMERGENCY STEERING SYSTEM FOR WHEELED EXCAVATORS**

(30) Priority: 20.06.2023 KR 20230078665
(71) Applicant: HD Hyundai Infracore Co., Ltd., Incheon 22502 (KR)
(72) Inventor: KWAK, Hongsup, 15010 Siheung-si, Gyeonggi-do (KR); JUNG, Chuljong, 14074 Anyang-si, Gyeonggi-do (KR)
(74) Representative: Isarpatent

(57) **Abstract**

The present disclosure relates to an emergency steering system (101) for a wheeled excavator, which is installed on the wheeled excavator including an engine (100), a steering device (200) for steering wheels, and a steering pump (300) operated by the engine (100) to supply hydraulic oil to the steering device (200). The emergency steering system (101) comprises: an emergency steering device (400) configured to selectively supply hydraulic oil to the steering device (200); a display unit (700) that provides operating status information of the emergency steering device (400); and a control unit (500) that checks status of the emergency steering device (400) and causes the display unit (700) to output the status upon startup of the engine (100).

## Description

### TECHNICAL FIELD

The present disclosure relates to an emergency steering system installed on a wheeled excavator that uses wheels as a traveling body, and more specifically, to an emergency steering system for a wheeled excavator that can effectively drive a steering device in the event of an emergency situation in which the steering device does not operate normally.

### BACKGROUND

In general, an excavator excavates soil. Specifically, the excavator may be equipped with an attachment, which allows the excavator to perform various tasks.

The excavator may be a wheeled excavator having wheels as traveling bodies, which makes it easier to move than a crawler excavator.

In the case of a wheeled excavator, when a problem occurs in a hydraulic oil supply unit that supplies hydraulic oil to a steering device for steering, it is difficult to operate the steering device. Specifically, when it is difficult for a driver to operate the steering device due to a problem with the hydraulic oil supply unit, the driver should perform steering with physical force provided by the driver. In other words, there is a problem that the driver should exert a lot of force to operate the steering wheel.

Therefore, it is needed a system that can operate the steering device even in emergency situations when a problem occurs in the hydraulic oil supply unit.

### SUMMARY

In view of the above, the present disclosure provides an emergency steering system for a wheeled excavator that effectively provides hydraulic oil even if a problem occurs in a hydraulic oil supply unit that supplies hydraulic oil to a steering device, allowing the steering device to be driven even in an emergency situation.

According to one embodiment of the present disclosure, an emergency steering system for a wheeled excavator, which is installed on the wheeled excavator including an engine, a steering device for steering wheels, and a steering pump operated by the engine to supply hydraulic oil to the steering device, comprises: an emergency steering device configured to selectively supply hydraulic oil to the steering device; a display unit that provides operating status information of the emergency steering device; and a control unit that checks status of the emergency steering device and causes the display unit to output the status upon startup of the engine.

Further, the emergency steering device may include: a pump operated by the engine to discharge hydraulic oil; and a switching valve capable of selectively supplying hydraulic oil from the pump to the steering device.

Further, the emergency steering device may further include a first information unit that provides information on hydraulic oil supplied from the pump to the steering device through the switching valve.

Further, the emergency steering device may further include a second information unit that provides information on hydraulic oil supplied from the steering pump to the steering device.

Further, the control unit may determine whether the emergency steering device is operating or not based on the information on the hydraulic oil received from the second information unit.

Further, the second information unit may be a pressure switch that is selectively operated according to a preset steering pressure.

Further, when the emergency steering device is operated, the display unit outputs that the emergency steering device is operating.

Further, the pump may supply hydraulic oil to an attachment drive unit.

Further, when checking the status of the emergency steering device, the control unit may determine whether the emergency steering device is operable based on the information from the first information unit.

Further, the emergency steering device may further include a first check valve that is opened in one direction by the hydraulic oil supplied from the pump to the steering device.

Further, the emergency steering device may further include a second check valve that is opened in one direction by the hydraulic oil supplied from the steering pump to the steering device.

Alternatively, According to one embodiment of the present disclosure, an emergency steering system for a wheeled excavator, which is installed on the wheeled excavator including an engine, a steering device for steering wheels, a steering pump operated by the engine to supply hydraulic oil to the steering device, and a steering hydraulic line that delivers hydraulic oil from the steering pump to the steering device, comprises: a pump operated by the engine to discharging pressure oil; an emergency hydraulic line that supplies hydraulic oil discharged from the pump to the steering hydraulic line; a switching valve configured to selectively supply hydraulic oil passing through the emergency hydraulic line to the steering device; an emergency steering device configured to selectively supply hydraulic oil to the steering device; a first information unit that senses information on operating status of the emergency steering device by sensing information on the hydraulic oil passing through the switching valve; a second information unit that senses information on hydraulic oil passing through the steering hydraulic line; a display unit providing information on operating status of the emergency steering device and the steering device; and a control unit that determines the status of the emergency steering device and the steering device based on the information from the first information unit and the second information unit and transmits the determined status to the display unit.

Further, the emergency steering device may include: a first check valve disposed on the emergency hydraulic line between the switching valve and the steering hydraulic line, which opens the emergency hydraulic line in one direction by hydraulic oil discharged from the pump; and a second check valve disposed on the steering hydraulic line to prevent hydraulic oil supplied from the emergency hydraulic line from flowing into the steering pump.

Alternatively, the display unit may display the information on operating status of the emergency steering device and the steering device within a certain time after the engine is started.

According to the embodiments of the present disclosure, the emergency steering system for the wheeled excavator can effectively supply hydraulic oil even if a problem occurs in the hydraulic oil supply unit that supplies hydraulic oil to the steering device. Accordingly, the driver can enable the steering device to be driven without operating the steering with great force. In addition, the emergency steering system for the wheeled excavator can check the availability of the emergency steering device when the engine is started, so it can be effectively utilized when actually needed.

Further, the emergency steering system for the wheeled excavator can display the check status or operating status of the emergency steering device to the driver.

### BRIEF DESCRIPTION OF THE DRAWINGS

FIG. 1 is shows an emergency steering system for a wheeled excavator according to one embodiment of the present disclosure.
FIG. 2 shows a configuration diagram of the emergency steering system for a wheeled excavator according to one embodiment of the present disclosure.
FIG. 3 shows the operation of the emergency steering device of the emergency steering system for a wheeled excavator according to one embodiment of the present disclosure.
FIG. 4 shows the operation process of the emergency steering system for a wheeled excavator according to one embodiment of the present disclosure.

### DETAILED DESCRIPTION

Hereinafter, with reference to the accompanying drawings, embodiments of the present disclosure will be described in detail so that one having ordinary skill in the art to which the present disclosure pertains can easily practice the present disclosure. The present disclosure may be implemented in many different forms and is not limited to the embodiments described herein.

It is noted that the drawings are schematic and not shown to scale. The relative dimensions and proportions of parts in the drawings are shown exaggerated or reduced in size for clarity and convenience in the drawings and any dimensions are exemplary and not limiting. In addition, the same reference numerals are used for the same structural elements or parts appearing in two or more drawings to indicate similar features.

The embodiments of the present disclosure specifically represent ideal embodiments of the present disclosure. As a result, various modifications of the illustrations are expected. Accordingly, the embodiments are not limited to the specific shape of the illustrated area and include changes in shape due to manufacturing, for example.

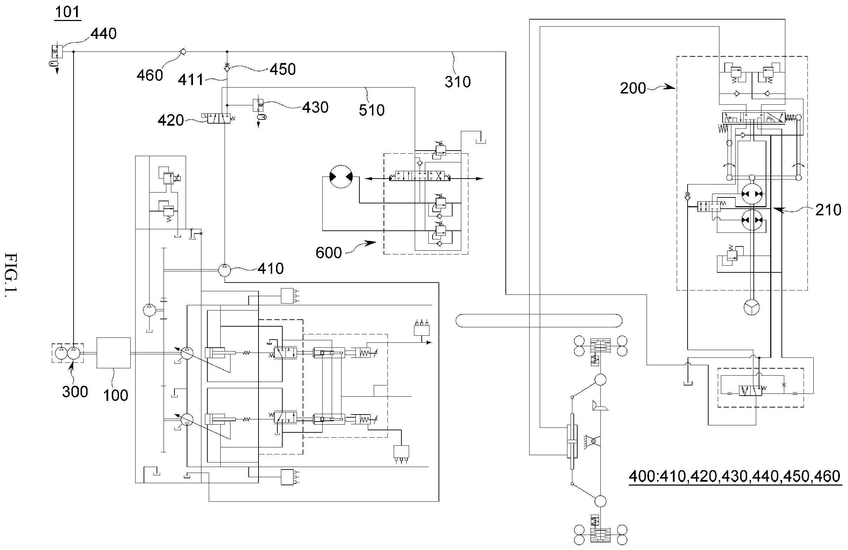

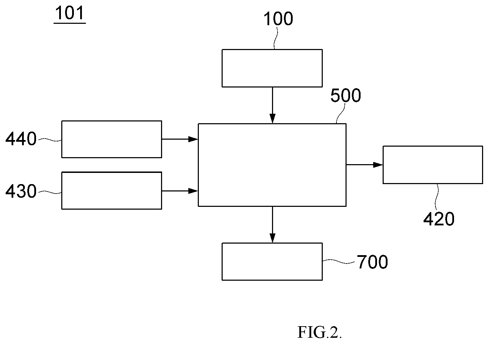

Hereinafter, with reference to FIGS. 1 to 3, an emergency steering system 101 for a wheeled excavator according to one embodiment of the present disclosure will be described.

The emergency steering system 101 for the wheeled excavator may be installed on a wheeled excavator. Specifically, the wheeled excavator includes an engine 100, a steering device 200, and a steering pump 300.

The engine 100 produces power. The steering device 200 steers wheels so that the wheeled excavator moves or travels in the direction desired by a driver. Specifically, the steering device 200 includes a gerotor 210. The gerotor 210 controls a plurality of steering cylinders.

The steering pump 300 is operated by power produced by the engine 100 and supplies hydraulic oil to the steering device 200.

Accordingly, the wheeled excavator travels or moves according to the hydraulic oil supplied from the steering pump 300 and information operated by the driver.

The emergency steering system 101 for the wheeled excavator according to one embodiment of the present disclosure includes an emergency steering device 400, a display unit 700, and a control unit 500, as shown in FIGS. 1 to 3.

The emergency steering device 400 can selectively supply hydraulic oil to the steering device 200. Specifically, the emergency steering device 400 selectively supplies hydraulic oil to the steering device 200 to solve a problem where the steering device 200 is difficult to operate with the hydraulic oil provided by the steering pump 300.

The display unit 700 may provide information on the operating status of the emergency steering device 400. Specifically, the display unit 700 may output information on the operating status of the emergency steering device 400 to the driver of the wheeled excavator.

For example, the display unit 700 may display information on whether the emergency steering device 400 is currently operating, whether the emergency steering device 400 is not currently operating, or whether the emergency steering device 400 is currently being checked.

Upon startup of the engine 100, the control unit 500 may check the status of the emergency steering system 400 and cause the status to be output on the display 700. Specifically, the control unit 500 may receive startup information of the engine 100, check the status of the emergency steering system 400, and cause the information on the status to be displayed on the display 700.

In one example, the startup of the engine 100 may mean the point in time when the engine 100 is started or the point in time when a predetermined period of time has elapsed after the engine 100 is started. In other words, the control unit 500 may check the status of the emergency steering system 400 after receiving the startup information of the engine 100.

Accordingly, the emergency steering system 101 for a wheeled excavator according to one embodiment of the present disclosure can check the status of the emergency steering device 400 that can selectively supply hydraulic oil to the steering device 200 upon the startup of the engine 100, and output it on the display 700. That is, in the emergency steering system 101 for the wheeled excavator, the control unit 500 may determine whether the emergency steering device 400 is operable for safety upon the startup of the engine 100, and notify it to the driver through the display unit 700.

In addition, the emergency steering device 400 of the emergency steering system 101 for the wheeled excavator according to one embodiment of the present disclosure may include a pump 410 and a switching valve 420.

The pump 410 may be operated by the engine 100. Further, the pump 410 may discharge hydraulic oil. Specifically, the pump 410 and the steering pump 300 may be operated by the power produced by the engine 100.

The switching valve 420 can selectively supply hydraulic oil from the pump 410 to the steering device 200. Specifically, the switching valve 420 is controlled by the control unit 500 to be selectively switched to allow or block the supply of the hydraulic oil from the pump 410 to the steering device 200.

Accordingly, the emergency steering device 400 can selectively allow hydraulic oil discharged by the pump 410 to be supplied to the steering device 200 using the switching valve 420.

In addition, the emergency steering device 400 of the emergency steering system 101 for the wheeled excavator according to one embodiment of the present disclosure may further include a first information unit 430.

The first information unit 430 may provide information on the hydraulic oil supplied from the pump 410 to the steering device 200 through the switching valve 420. In addition, the first information unit 430 may provide information on hydraulic oil when the hydraulic oil discharged from the pump 410 is supplied to the steering device 200.

For example, the first information unit 430 may be a sensor that detects pressure or a pressure switch that operates at a preset reference pressure.

Accordingly, when the first information unit 430 is the sensor, the control unit 500 may receive the detected pressure of the hydraulic oil supplied from the pump 410 to the steering device 200.

Alternatively, when the first information unit 430 is the pressure switch operated at the preset reference pressure, the control unit 500 may receive pressure information of the hydraulic oil discharged from the pump 410 from the operating state of the first information unit 430. Specifically, when the first information unit 430 is the pressure switch and operates at the preset reference pressure, the display unit 700 may indicate that the emergency steering device 400 is operating or being checked.

That is, based on the information provided by the first information unit 430, the display unit 700 may indicate that the emergency steering device 400 is in operation or being checked.

In addition, the emergency steering device 400 of the emergency steering system 101 for the wheeled excavator according to one embodiment of the present disclosure may further include a second information unit 440.

The second information unit 440 may provide information on the hydraulic oil supplied from the steering pump 300 to the steering device 200.

For example, the second information unit 440 may be a sensor that detects pressure or a pressure switch that operates at a preset reference pressure.

Accordingly, when the second information unit 440 is the sensor, the control unit 500 may receive the detected pressure of hydraulic oil supplied from the steering pump 300 to the steering device 200. Alternatively, when the second information unit 440 is the pressure switch operated at a preset steering pressure, the control unit 500 may receive the pressure of hydraulic oil supplied to the steering device 200 from the operating state of the second information unit 440.

In addition, the emergency steering system 101 for the wheeled excavator according to one embodiment of the present disclosure may output that the emergency steering device 400 is operating on the display unit 700 when the emergency steering device 400 is operating.

When the emergency steering device 400 is operated, the display unit 700 outputs that the emergency steering device 400 is currently operating, thereby providing visual information to the driver.

Specifically, when the emergency steering device 400, in which the pump 410 supplies pressure oil to the steering device 200 under control of the switching valve 420, is operated, the display unit 700 may output that the emergency steering system 400 is currently operating.

In this case, the display unit 700 may turn on a symbol notifying the operation of the emergency steering device 400 or notify the driver of the operation of the emergency steering device 400 through text or auditory information.

As an example, the display unit 700 may be an instrument panel that displays operation information of the excavator or status information of configuration of the excavator.

In addition, the pump 410 of the emergency steering device 400 according to one embodiment of the present disclosure may supply hydraulic oil to an attachment drive unit 600 included in the wheeled excavator.

The attachment driving unit 600 may provide power to drive an attachment installed on one end of the wheeled excavator. Specifically, the pump 410 can provide hydraulic oil to drive the attachment drive unit 600, and also supply hydraulic oil to the steering device 200 to operate the emergency steering device 400.

That is, the pump 410 can selectively supply hydraulic oil to the attachment drive unit 600, which provide power to the attachment that is detachably installed on the wheeled excavator for work thereof, and the steering device 200.

As an example, the pump 410 may be a gear pump. Therefore, the emergency steering system 101 for the wheeled excavator can utilize hydraulic oil from the gear pump for the emergency steering device 400.

Accordingly, the emergency steering device 400 can supply the hydraulic oil that operates the attachment drive unit 600 to the steering device 200. In other words, the emergency steering system 101 for a wheeled excavator can ensure stable steering of the wheeled excavator by supplying the hydraulic oil supplied to the attachment drive unit 600 to the steering device 200 when emergency steering is required.

In addition, in the emergency steering system 101 for a wheeled excavator according to one embodiment of the present disclosure, the control unit 500 may determine whether the emergency steering device 400 is operable based on the information from the first information unit 430.

Upon startup of the engine 100, the control unit 500 may operate the switching valve 420 to allow the pump 410 to supply hydraulic oil to the steering device 200. At this time, the control unit 500 may check the status of the emergency steering device 400 based on the information from the first information unit 430. Specifically, the control unit 500 may check whether the emergency steering device 400 is operable based on the information from the first information unit 430. Then, the control unit 500 may output the fact that the emergency steering device 400 is operable through the display unit 700 so that the driver can recognize it.

That is, upon startup of the engine 100, the control unit 500 may perform a check process to determine whether the emergency steering device 400, which is to be operated as needed, is operable or not based on the information from the first information unit 430.

In addition, the emergency steering device 400 of the emergency steering system 101 for a wheeled excavator according to one embodiment of the present disclosure may further include a first check valve 450.

The first check valve 450 may be opened in one direction by the hydraulic oil supplied from the pump 410 to the steering device 200. In addition, the first check valve 450 can prevent the hydraulic oil passing through the switching valve 420 from flowing into the switching valve 420. Further, the first check valve 450 may prevent the hydraulic oil of the steering pump 300 from flowing to the switching valve 420 so that the first information unit 430 can transmit information on the hydraulic oil passing through the switching valve 420 to the control unit 500.

In addition, the emergency steering device 400 of the emergency steering system 101 for a wheeled excavator according to one embodiment of the present disclosure may further include a second check valve 460.

The second check valve 460 may be opened in one direction by the hydraulic oil supplied from the steering pump 300 to the steering device 200. Further, when the hydraulic oil of the pump 410 is supplied to the steering device 200 under the control of the switching valve 420, the second check valve 460 can prevent the hydraulic oil from draining into the steering pump 300.

In addition, the wheeled excavator may further include a steering hydraulic line 310.

The steering hydraulic line 310 delivers hydraulic oil from the steering pump 300 to the steering device 200. That is, the steering hydraulic line 310 guides the hydraulic oil discharged from the steering pump 300 to move to the steering device 200.

In addition, the control unit 500 according to one embodiment of the present disclosure determines whether the emergency steering device 400 needs to be operated based on information on hydraulic oil passing through the steering hydraulic line 310. Specifically, the control unit 500 may determine whether the operation of the emergency steering device 400 is currently required or not based on information on the hydraulic oil passing through the steering hydraulic line 310.

In this way, the emergency steering system 101 for a wheeled excavator according to one embodiment of the present disclosure may operate the emergency steering device 400 to supply hydraulic oil to the steering device 200 based on whether operation of the emergency steering device 400 is currently required using information on the hydraulic oil passing through the steering hydraulic line 310. That is, the emergency steering system 101 for the wheeled excavator operates the emergency steering device 400 to supply hydraulic oil to the steering device 200 based on whether operation of the emergency steering device 400 is currently required, so that the steering device 200 can be operated stably according to the driver's needs.

In addition, the emergency steering device 400 of the emergency steering system 101 for a wheeled excavator according to one embodiment of the present disclosure may further include an emergency hydraulic line 411.

The emergency hydraulic line 411 can supply hydraulic oil discharged from the pump 410 to the steering hydraulic line 310. In addition, the emergency hydraulic line 411 may be disposed between the pump 410 and the steering hydraulic line 310 to deliver the hydraulic oil from the pump 410 to the steering hydraulic line 310. That is, one side of the emergency hydraulic line 411 may be connected to the pump 410, and the other side of the emergency hydraulic line 411 may be connected to the steering hydraulic line 310 to communicate therewith.

In addition, the switching valve 420 can selectively supply hydraulic oil passing through the emergency hydraulic line 411 to the steering device 200. Specifically, the switching valve 420 may be selectively controlled by the controller 500 to move the hydraulic oil passing through the emergency hydraulic line 411 to the steering hydraulic line 310. Alternatively, the switching valve 420 may be selectively controlled by the controller 500 to prevent the hydraulic oil discharged from the pump 410 from flowing into the steering hydraulic line 310.

That is, the switching valve 420 can selectively open and close the flow path inside the emergency hydraulic line 411.

Accordingly, the switching valve 420 controlled by the control unit 500 can open and close the emergency hydraulic line 411 to selectively supply the hydraulic oil discharged from the pump 410 to the steering hydraulic line 310.

In addition, the first information unit 430 according to one embodiment of the present disclosure may provide information on hydraulic oil passing through the emergency hydraulic line 411.

The first information unit 430 may provide information on the hydraulic oil discharged from the pump 410 and passing through the switching valve 420 to move along the emergency hydraulic line 411 under the control of the switching valve 420.

For example, the first information unit 430 may be a sensor that detects pressure or a pressure switch that operates at a preset reference pressure. When the first information unit 430 is the pressure switch, information indicating that the emergency steering device 400 is operating or is operable may be provided to the display unit 700. Specifically, in case that the first information unit 430 is the pressure switch, the pressure switch is operated when the hydraulic oil passing through the emergency hydraulic line 411 is at the preset reference pressure, and accordingly, a lamp of an icon or image set on the display unit 700, which indicates that the emergency steering device 400 is operating or is operable, may be turned on.

Alternatively, in case that the first information unit 430 is the pressure switch, the pressure switch is operated when the hydraulic oil passing through the emergency hydraulic line 411 is at the preset reference pressure, and the control unit 500 may receive the operation signal of the pressure switch and determined that current pressure of the hydraulic oil is equal to or above the preset reference pressure. Accordingly, the control unit 500 may turn on the lamp of the icon or image set in the display unit 700, which indicates that the emergency steering device 400 is operating or is operable.

Alternatively, in case that the first information unit 430 is the sensor, the control unit 500 may receive information about the hydraulic oil passing through the emergency hydraulic line 411 and cause the display unit 700 to output information that the emergency steering device 400 is operating or is operable. Specifically, the control unit 500 may turn on the lamp of the icon or image set in the display unit 700, which indicates that the emergency steering device 400 is operating or is operable.

In addition, the first check valve 450 according to one embodiment of the present disclosure may be disposed on the emergency hydraulic line 411 between the switching valve 420 and the steering hydraulic line 310.

The first check valve 450 may be disposed on the emergency hydraulic line 411 between the switching valve 420 and the steering hydraulic line 310. In addition, the first check valve 450 can open the emergency hydraulic line 411 in one direction by hydraulic oil discharged from the pump 410 and passing through the switching valve 420.

Specifically, the first check valve 450 may be opened by hydraulic oil passing through the switching valve 420. In addition, when the emergency hydraulic line 411 is not opened by the switching valve 420, the first check valve 450 may prevent the hydraulic oil passing through the steering hydraulic line 310 from flowing in the switching valve 420 and the pump 410. That is, the first check valve 450 can ensure that the hydraulic oil discharged from the steering pump 300 is effectively supplied to the steering device 200.

In addition, the second information unit 440 according to one embodiment of the present disclosure may transmit information about hydraulic oil passing through the steering hydraulic line 310 to the control unit 500.

The control unit 500 may receive information about hydraulic oil passing through the steering hydraulic line 310 from the second information unit 440 and determine whether operation of the emergency steering device 400 is required. Specifically, the second information unit 440 transmits information about the hydraulic oil passing through the steering hydraulic line 310 to the control unit 500, so that the control unit 500 determines whether the emergency steering device 400 is required to operate or not.

For example, the second information unit 440 may be a pressure switch that operates at a preset steering pressure. In case that the second information unit 440 is the pressure switch, the pressure switch is operated when the hydraulic oil passing through the steering hydraulic line 310 is at the preset steering pressure, and the control unit 500 receives the operation signal of the pressure switch to determine that the operation of the emergency steering device 400 is currently required.

Specifically, the preset steering pressure at which the second information unit 440 operates may be a pressure value at which it is difficult to drive the steering device 200 using the pressure of hydraulic oil of the steering pump 300.

For example, the second information unit 440 may be turned on at a pressure of 3 bars or less and turned off at a pressure of more than 3 bars.

In other words, the second information unit 440 may operate when it is difficult to drive the steering device 200 with the pressure of hydraulic oil supplied from the steering pump 300 and the operation signal of the second information unit 440 may be transmitted to the control unit 500.

In addition, the second check valve 460 according to one embodiment of the present disclosure can prevent hydraulic oil supplied from the emergency hydraulic line 411 from flowing into the steering pump 300 along the steering hydraulic line 310..

The second check valve 460 may be disposed in the steering hydraulic line 310. In addition, the second check valve 460 can open the flow path inside the steering hydraulic line 310 in one direction, and prevent the hydraulic oil flowing into the steering hydraulic line 310 from the emergency hydraulic line 411 from draining into the steering pump 300.

Specifically, when hydraulic oil is supplied from the emergency hydraulic line 411 to the steering hydraulic line 310 in a state where the pressure of the hydraulic oil passing through the steering hydraulic line 310 is low, the second check valve 460 may prevent the hydraulic oil supplied to the steering hydraulic line 310 from the emergency hydraulic line 411 from draining into the steering pump 300.

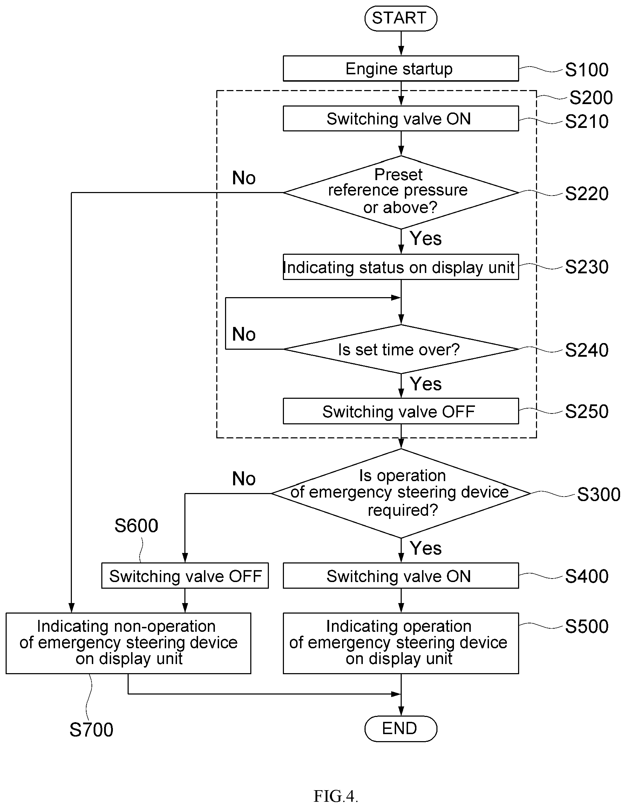

Hereinafter, with reference to FIGS. 1 to 4, the operation process of the emergency steering system 101 for a wheeled excavator according to one embodiment of the present disclosure will be described.

The control unit 500 receives engine startup information from the engine 100 (S100).

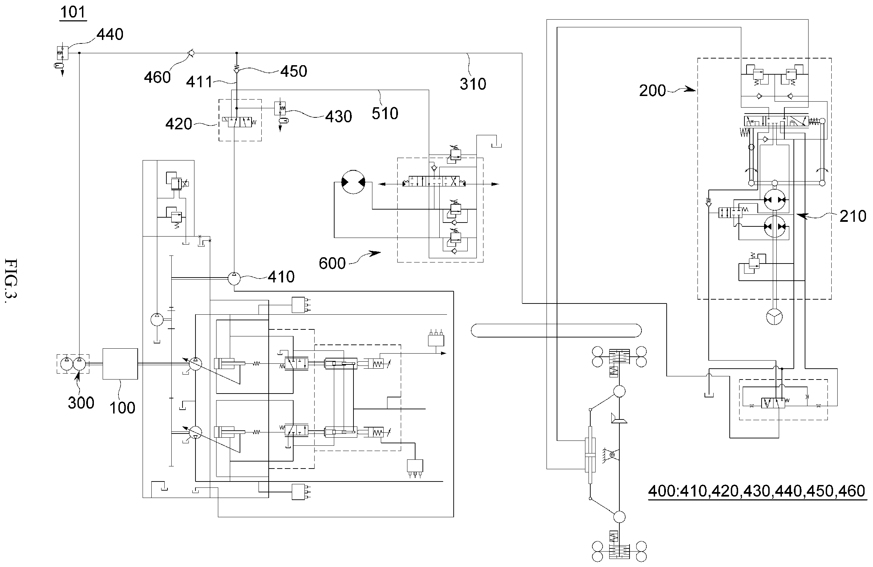

Then, the control unit 500 executes a checking step of checking the emergency steering device 400 (S200). Specifically, the control unit 500 executes the checking step of checking the emergency steering device 400 for a preset time after receiving the engine startup information. As shown in FIG. 3, the control unit 500 operates the switching valve 420 to allow hydraulic oil from the pump 410 to flow into the steering hydraulic line 310 (S210). At this time, the first information unit 430 provides information on hydraulic oil passing through the steering hydraulic line 310. The first information unit 430, which is the pressure switch, may be operated when the pressure of the hydraulic oil is the preset reference pressure or above.

The control unit 500 determines whether the pressure of the hydraulic oil passing through the steering hydraulic line 310 is the preset reference pressure or above according to the hydraulic oil information provided by the first information unit 430 (S220).

When it is determined that the pressure of the hydraulic oil passing through the steering hydraulic line 310 is the preset reference pressure or above according to the hydraulic oil information provided by the first information unit 430, the display unit 700 visually indicates that the emergency steering device 400 is currently operating or is operable through checking (S230).

The control unit 500 operates the switching valve 420 for a set time to check the emergency steering device 400 (S240).

The control unit 500 causes the switching valve 420 to return to its original position as shown in FIG. 1 (S250). Specifically, the control unit 500 can block the hydraulic oil discharged from the pump 410 from flowing into the steering hydraulic line 310 by controlling a signal to the switching valve 420.

Alternatively, when it is determined that the pressure of the hydraulic oil passing through the steering hydraulic line 310 is below the preset reference pressure according to the hydraulic oil information provided by the first information unit 430, the display unit 700 may visually indicate that the emergency steering device 400 is not currently operating or is inoperable state (S700). The lamp of the icon or image indicating the operation of the emergency steering device 400, on the display unit 700, may be turned off.

After performing the checking step for the emergency steering device 400, the control unit 500 determines whether the emergency steering device 400 needs to be operated (S300). Specifically, the control unit 500 may determine whether the steering device 200 can be effectively driven with the hydraulic oil supplied by the steering pump 300 based on the information provided by the second information unit 440. When the second information unit 440, which is the pressure switch, operates, the control unit 500 determines that the steering device 200 cannot be effectively driven with the hydraulic oil passing through the steering hydraulic line 310 from the operation signal of the second information unit 440, and operates the emergency steering device 400.

In this case, when the control unit 500 determines that operation of the emergency steering device 400 is required, the control unit 500 may control the switching valve 420 to supply the hydraulic oil from the pump 410 to the steering hydraulic line 310 (S400). In addition, as the hydraulic oil passes through the steering hydraulic line 310, the display unit 700 may indicate that the emergency steering device 400 is currently operating based on the information provided by the first information unit 430 (S500). Accordingly, the operator can recognize that the emergency steering device 400 is currently operating through the information on the display unit 700.

Alternatively, when the second information unit 440, which is the pressure switch, is not operated, the control unit 500 determines that the steering device 200 can be effectively driven with the hydraulic oil passing through the steering hydraulic line 310 from the operation signal of the second information unit 440, and does not operate the emergency steering device 400.

When the second information unit 440, which is the pressure switch, is not operated, the control unit 500 controls the switching valve 420 to prevent hydraulic oil from the pump 410 from being continuously supplied to the steering hydraulic line 310 (S600). Since no hydraulic oil passes through the switching valve 420 to the steering hydraulic line 310, the display unit 700 may indicate that the emergency steering device 400 is not currently operating based on the information provided by the first information unit 430 (S700). For example, the lamp of the icon or image indicating the operation of the emergency steering device 400, on the display unit 700, may be turned off.

With such configurations, the emergency steering system 101 for a wheeled excavator according to one embodiment of the present disclosure can supply hydraulic oil from the pump 410 to the steering device 200 in an emergency situation where it is difficult to drive the steering device 200 only with the hydraulic oil of the steering pump 300, so that the steering device 200 can be driven.

Accordingly, the steering device 200 can be driven in an emergency situation due to insufficient hydraulic oil without requiring an operator to apply physical force to drive the steering device 200.

In addition, the emergency steering system 101 for the wheeled excavator can stably perform the checking step for the emergency steering device 400 upon startup of the engine 100, thereby effectively operating the emergency steering device 400 when an emergency situation occurs.

Although the embodiments of the present disclosure have been described above with reference to the accompanying drawings, those skilled in the art to which the present disclosure pertains will understand that the present disclosure can be implemented in other specific forms without changing its technical idea or essential features.

Therefore, the embodiments described above should be understood in all respects as illustrative and not restrictive, the scope of the present disclosure should be defined by the following claims, and the meaning and scope of the claims and all changes or modifications derived from the equivalents thereof should be construed as falling within the scope of the present disclosure.

### (Description of Reference Numerals)

| | | | |
|---|---|---|---|
| 101: | emergency steering system for wheeled excavator | | |
| 100: | engine | 200: | steering device |
| 300: | steering pump | 310: | steering hydraulic line |
| 400: | emergency steering device | 410: | pump |
| 411: | emergency hydraulic line | 420: | switching valve |
| 430: | first information unit | 440: | second information unit |
| 450: | first check valve | 460: | second check valve |
| 500: | control unit | 600: | attachment drive unit |
| 700: | display unit | | |

## Claims

1. An emergency steering system (101) for a wheeled excavator, which is installed on the wheeled excavator including an engine (100), a steering device (200) for steering wheels, and a steering pump (300) operated by the engine to supply hydraulic oil to the steering device, the system comprising:
an emergency steering device (400) configured to selectively supply hydraulic oil to the steering device;
a display unit (700) that provides operating status information of the emergency steering device; and
a control unit (500) that checks status of the emergency steering device and causes the display unit to output the status upon startup of the engine.

2. The emergency steering system of claim 1, wherein the emergency steering device includes:
a pump (410) operated by the engine to discharge hydraulic oil; and
a switching valve (420) configured to selectively supply hydraulic oil from the pump to the steering device.

3. The emergency steering system of claim 2, wherein the emergency steering device further includes a first information unit (430) that provides information on hydraulic oil supplied from the pump to the steering device through the switching valve.

4. The emergency steering system of claim 2, wherein the emergency steering device further includes a second information unit (440) that provides information on hydraulic oil supplied from the steering pump to the steering device.

5. The emergency steering system of claim 4, wherein the control unit (500) determines whether the emergency steering device (400) is operating or not based on the information on the hydraulic oil received from the second information unit (440).

6. The emergency steering system of claim 5, wherein when the emergency steering device (400) is operated, the display unit outputs that the emergency steering device (400) is operating.

7. The emergency steering system of claim 5, wherein the pump (410) is configured to supply hydraulic oil to an attachment drive unit (600).

8. The emergency steering system of claim 5, wherein when checking the status of the emergency steering device (400), the control unit determines whether the emergency steering device is operable based on the information from the first information unit (430).

9. The emergency steering system of claim 5, wherein the emergency steering device (400) further includes a first check valve (450) that is opened in one direction by the hydraulic oil supplied from the pump to the steering device (200).

10. The emergency steering system of claim 5, wherein the emergency steering device (400) further includes a second check valve (460) that is opened in one direction by the hydraulic oil supplied from the steering pump to the steering device (200).

11. An emergency steering system (101) for a wheeled excavator, which is installed on the wheeled excavator including an engine (100), a steering device (200) for steering wheels, a steering pump (300) operated by the engine to supply hydraulic oil to the steering device, and a steering hydraulic line (310) that delivers hydraulic oil from the steering pump to the steering device, the system comprising:
a pump (410) operated by the engine to discharging pressure oil;
an emergency hydraulic (411) line that supplies hydraulic oil discharged from the pump to the steering hydraulic line;
a switching valve (420) configured to selectively supply hydraulic oil passing through the emergency hydraulic line to the steering device;
an emergency steering device (400) configured to selectively supply hydraulic oil to the steering device;
a first information unit (430) that senses information on operating status of the emergency steering device by sensing information on the hydraulic oil passing through the switching valve;
a second information unit (440) that senses information on hydraulic oil passing through the steering hydraulic line;
a display unit (700) providing information on operating status of the emergency steering device and the steering device; and
a control unit (500) that determines the status of the emergency steering device and the steering device based on the information from the first information unit and the second information unit and transmits the determined status to the display unit.

12. The emergency steering system of claim 11, wherein the emergency steering device includes:
a first check valve (450) disposed on the emergency hydraulic line between the switching valve and the steering hydraulic line, which opens the emergency hydraulic line in one direction by hydraulic oil discharged from the pump; and
a second check valve (460) disposed on the steering hydraulic line to prevent hydraulic oil supplied from the emergency hydraulic line from flowing into the steering pump.

13. The emergency steering system of claim 11, wherein the display unit (700) displays the information on operating status of the emergency steering device (400) and the steering device (200) within a certain time after the engine (100) is started.
